# EUROPÄISCHE PATENTANMELDUNG

(11) **EP 0 557 873 A2**
(43) Veröffentlichungstag der Anmeldung: **01.09.1993**
(21) Anmeldenummer: 93102441.8
(22) Anmeldetag: 17.02.1993
(51) Int. Cl.: H04B 17/00, H04Q 7/04

(54) **Funkerfassungsanlage**

(30) Priorität: 26.02.1992 DE 4205825
(71) Anmelder: Rohde & Schwarz GmbH & Co. KG, D-81671 München (DE)
(72) Erfinder: Knirsch, Herbert, W-8058 Erding (DE)
(74) Vertreter: Graf, Walter, Dipl.-Ing.

(57) **Zusammenfassung**

Bei einer Funkerfassungsanlage mit mindestens einer einen vorgegebenen Frequenzbereich zyklisch absuchenden Empfangseinrichtung und mehreren Auswerteinrichtungen zum Auswerten verschiedener Parameter des Empfangssignals, sind die Auswerteinrichtungen so ausgebildet, daß das Produkt aus der Anzahl der innerhalb eines Absuchzyklus auszuwertenden Empfangssignale mal der Zeitdauer der Auswertung des zugehörigen Signalparameters etwa gleich groß ist; dabei wird gesteuert durch eine Steuereinrichtung automatisch zunächst mittels derjenigen Auswerteinrichtung, welche die geringste Zeitdauer für die Auswertung des zugehörigen Signalparametes benötigt, der zugehörige Signalparameter des Empfangssignales erfaßt und in einem Vergleicher mit vorgegebenen Grenzwerten verglichen und nur diejenigen Empfangssignale, die innerhalb dieser vorgegebenen Grenzwerte liegen, werden der Auswerteinrichtung mit der nächst geringeren Auswert-Zeitdauer zugeführt, die ihrerseits den nächsten Signalparameter der Empfangssignale erfaßt und in einem Vergleicher mit vorgegebenen Grenzwerten vergleicht und ihrerseits nur diejenigen Empfangssignale, die innerhalb dieser vorgegebenen Grenzwerte liegen, der Auswerteinrichtung mit der nächst geringeren Auswert-Zeitdauer zuführt, usw.

## Beschreibung

Die Erfindung betrifft eine Funkerfassungsanlage laut Oberbegriff des Hauptanspruches.

Bei der Funkerfassung muß sowohl die Belegungsdauer wie auch die Art der Belegung in großen Frequenzbereichen ermittelt werden. Dies wird bisher durch entsprechend qualifiziertes Personal unter Verwendung geeigneter Empfänger bewältigt. So stehen hierfür beispielsweise Panoramasichtgeräte für ganze Frequenzbereiche oder Teilbereiche zur Verfügung, an denen mittels verschiebbarer Frequenzmarken interessant erscheinende Empfangssignale ausgewählt und nach entsprechender Umschaltung des Empfängers - oder in einem gesonderten Empfänger - demoduliert und durch andere meßtechnische Verfahren analysiert, abgehört und identifiziert wurden. Die Erledigung all dieser Aufgaben durch einen Operator ist kostenintensiv, vor allem aber zeitraubend. Kurze Empfangssignale können auch mit modernsten Empfangsgeräten nicht erfaßt werden.

Es ist Aufgabe der Erfindung, eine Funkerfassungsanlage zu schaffen, mit der in kürzester Zeit automatisch interessierende Empfangssignale mit speziellen Signalparametern identifiziert und erfaßt werden können.

Diese Aufgabe wird ausgehend von einer Funkerfassungsanlage laut Oberbegriff des Hauptanspruches durch dessen kennzeichnende Merkmale gelöst. Vorteilhafte Weiterbildungen ergeben sich aus den Unteransprüchen.

Bei der erfindungsgemäßen Funkerfassungsanlage ist die Reihenfolge der Auswertung der einzelnen Signalparameter automatisch so gewählt, daß auf schnellstmögliche Weise interessierende Empfangssignale in einem breiten vorgegebenen Frequenzbereich identifiziert und erfaßt werden können. Bei einer erfindungsgemäßen Anordnung werden zunächst diejenigen Messungen am Empfangssignal durchgeführt, die in sehr kurzer Zeit möglich sind. Dabei werden viele Signale als für eine weitere Beobachtung irrelevant erkannt und können für die Weiterbearbeitung unberücksichtigt bleiben. Damit sind bei der nächsten Messung von weiteren interessierenden Signalparametern deutlich weniger Empfangssignale zu verarbeiten. Nach diesem Prinzip kann so eine Vielzahl von aufeinanderfolgenden Signalbewertungen durchgeführt werden, wobei über die erfindungsgemäße Bemessungsvorschrift, daß das Produkt aus der Anzahl der innerhalb eines Absuchzyklus auszuwertenden Signale mal der Zeitdauer der Auswertung des zugehörigen Signalparameters etwa gleich groß gewählt wird, in optimal kurzer Zeit das gewünschte Endergebnis erreicht wird. Da bei der erfindungsgemäßen Anordnung jeweils die erfaßten Signalparameter mit vorgegebenen Grenzwerten verglichen werden, was in moderner Rechnertechnik automatisch sehr schnell durchgeführt werden kann, ist jede einzelne Auswertung eines Signalparameters auf einfache Weise automatisch durchführbar, vor allem ist auch die Einleitung des Auswertvorgangs für den Signalparameter mit der nächst längeren Auswertzeitdauer automatisch möglich, so daß eine erfindungsgemäße Funkerfassungsanlage insgesamt vollautomatisch arbeitet und für die Auswertung kein Operator mehr nötig ist. Die Reihenfolge der nacheinander wirksamen Auswerteinrichtungen hängt von der Art der hierfür verwendeten Geräte ab. In einem praktischen Ausführungsbeispiel besteht eine Funkerfassungsanlage beispielsweise aus einem Suchlaufempfänger, der einen vorgegebenen Frequenzbereich von beispielsweise 110 MHz bis 150 MHz zyklisch absucht und der mit gesonderten Auswerteinrichtungen verbindbar ist, mit denenfolgende Signalparameter ausgewertet werden können:
Erkennung der Kanalbelegung
Erkennung der Grundmodulationsart Peileinrichtung zur Ermittlung der Einfallsrichtung eines Empfangssignals
Einrichtung zur Ortung eines Empfangssignals durch Triangulation aus mehreren Peilstandorten oder durch SSL (Single Station Location)-Auswert- verfahren
Spezielle Auswerteinrichtungen zum Messen des verwendeten Übertragungsverfahrens eines Empfangssignals, zur Ermittlung spezieller Merkmale des das Empfangssignal ausstrahlenden Senders (Fingerprinting von gesuchten Sendern, d.h. Auswertung spezieller Sendereigenschaften zu dessen Identifikation).

Eine derartige Funkerfassungsanlage arbeitet beispielsweise wie folgt:
1. Zunächst wird festgestellt, welche Kanäle des vorgegebenen Frequenzbereiches belegt sind. Dies kann extrem schnell beispielsweise in nur einer ms je Kanal festgestellt werden, zum Absuchen eines Frequenzbereiches mit beispielsweise 1000 Kanälen ist damit also für diese erste Auswertung nur eine Gesamtzeit von einer Sekunde für das Absuchen und Auswerten nötig.

Auf diese Weise wird beispielsweise festgestellt, daß nur etwa 100 beliebig verteilte Kanäle des Gesamtfrequenzbereiches belegt sind.
2. Aus dieser ersten Analyse ergibt sich, daß für die Auswertung des nächsten Signalparameters 10 ms Auswertzeit zur Verfügung stehen und trotzdem für einen Zyklus weiterhin nur insgesamt eine Sekunde benötigt wird. Damit ist beispielsweise die Auswertung der Grundmodulationsart als zweite Auswertung möglich, wenn hierfür 10 ms ausreichen.

Bei dieser zweiten Signalparameter-Auswertung wird beispielsweise festgestellt, daß nur noch zehn Empfangssignale der insgesamt 100 ausgewerteten Kanäle für die weitere Auswertung relevant und interessant sind, da beispielsweise nur zehn Empfangssignale als Sprachsignale erkannt werden und in dem speziellen Anwendungsfall nur Sprachsignale interessant sind.
3. Aus dieser Analyse ergibt sich, daß nunmehr für eine einzelne Auswertung bereits 100 ms zur Verfügung stehen und trotzdem insgesamt für einen nächsten Zyklus nur eine Sekunde benötigt wird. Damit ist beispielsweise eine Peilung möglich, es kann für die ausgewählten zehn Empfangssignale festgestellt werden, ob der Einfallswinkel nach Azimut und Elevation in einem durch Grenzwerte bestimmten Winkelbereich liegen und so für eine Auswertung überhaupt interessant sind.
4. Wird durch die peilung festgestellt, daß beispielsweise nur noch drei Signale überhaupt relevant sind, steht für die nächste Auswertung eine Zeit von etwa 300 ms pro Signal zur Verfügung, was beispielsweise ausreicht, um eine Ortung dieser drei relevanten Empfangssignale durch ein bekanntes Triangulations-Peilverfahren mittels an mehreren Peilstandorten aufgestellten Peilern durchzuführen, also den geographischen Ort der interessierenden Sender genau zu bestimmen. Dies kann im HF-Bereich beispielsweise auch durch ein sogenanntes SSL-Ortungsverfahren durchgeführt werden, das nur einen einzigen Peiler an einem Standort benötigt.
5. Wird dabei festgestellt, daß der Standort eines Senders in einem ausgewählten Zielgebiet liegt, können an diesem von diesem Sender stammenden Empfangssignal weitere noch mehr Zeit beanspruchende Messungen durchgeführt werden, über eine Signalanalyse kann beispielsweise festgestellt werden, ob der Sender auf eine ganz spezielle Art in seiner Frequenz instabil ist, was durch einen entsprechenden Analyseempfänger festgestellt werden kann. Auf diese Weise können spezielle technische Merkmale eines unbekannten Senders bestimmt werden und so dieser Sender dann auch identifiziert werden. Damit ist erreicht, daß mit minimalem Geräteaufwand Signale die in einem großen Frequenzbereich verteilt auftreten und eventuell nur für kurze Zeit aktiv sind erfaßt und identifiziert und lokalisiert werden können

Die Reihenfolge der einzelnen Auswertschritte wird selbstverständlich an die jeweiligen Aufgaben angepaßt, so können beispielsweise die Schritte zwei und drei vertauscht werden, wenn Peileinrichtungen zur Verfügung stehen, die schneller arbeiten als die verwendeten Einrichtungen zur Modulationsarterkennung. Für andere Aufgaben können natürlich Schritte des obigen Beispiels weggelassen oder zusätzliche Auswertschritte hinzugefügt werden. All dies hängt von der Aufgabenstellung und den zur Verfügung stehenden Auswertgeräten ab.

Im einfachsten Fall ist nur ein einzelner Suchlaufempfänger vorgesehen, dessen Ausgang mit den verschiedenen Auswerteinrichtungen verbunden wird, wobei die gleichzeitig beginnende Auswertung der einzelnen Signalparameter bei angehaltenem Suchempfänger auf einer Frequenz, auf der im ersten Schritt eine Belegung festgestellt wurde, durchgeführt wird und bei dem die einzelnen Auswertungen sofort abgebrochen werden und der Suchempfänger weiterläuft wenn die soeben durchgeführte Messung das Signal als nicht relevant ausscheidet.

Soll das Verfahren weiter beschleunigt werden, können die nach einem ersten, zweiten oder weiteren Auswertschritt als relevant erkannten Frequenzen an einen anderen Empfänger (Absetzempfänger) übergeben werden und der Suchlauf wird ohne weitere Unterbrechung fortgesetzt. Das erfindungsgemäße Prinzip ist in der Fig. schematisch dargestellt.

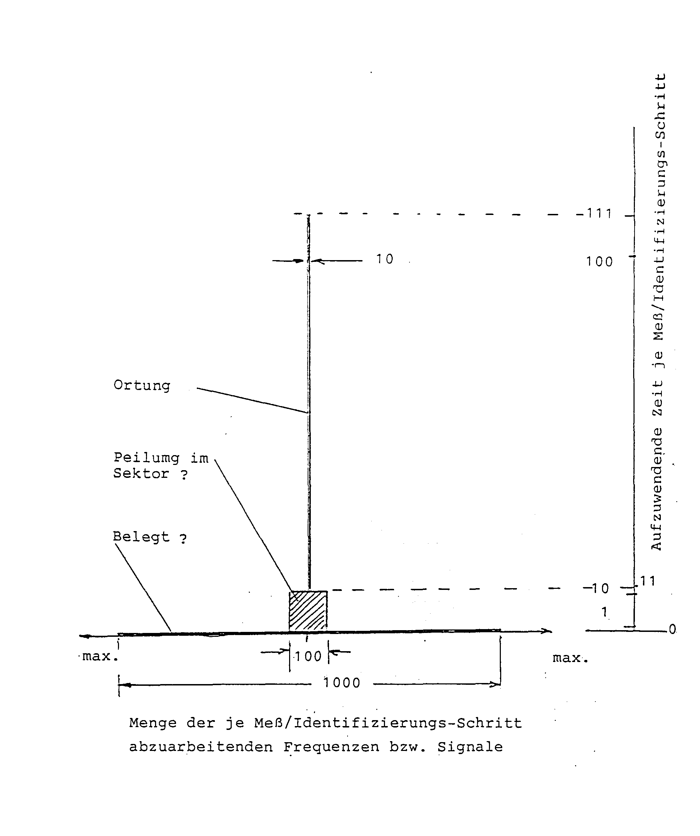

## Patentansprüche

1. Funkerfassungsanlage mit mindestens einer einen vorgegebenen Frequenzbereich zyklisch absuchenden Empfangseinrichtung und mehreren Auswerteinrichtungen zum Auswerten verschiedener Parameter des Empfangssignals, dadurch gekennzeichnet,
daß die Auswerteinrichtungen so ausgebildet sind, daß das Produkt aus der Anzahl der innerhalb eines Absuchzyklus auszuwertenden Empfangssignale mal der Zeitdauer der Auswertung des zugehörigen Signalparameters etwa gleich groß ist und
gesteuert durch eine Steuereinrichtung automatisch zunächst mittels derjenigen Auswerteinrichtung, welche die geringste Zeitdauer für die Auswertung des zugehörigen Signalparametes benötigt, der zugehörige Signalparameter des Empfangssignales erfaßt und in einem Vergleicher mit vorgegebenen Grenzwerten verglichen wird und nur diejenigen Empfangssignale, die innerhalb dieser vorgegebenen Grenzwerte liegen, der Auswerteinrichtung mit der nächst längeren Auswert-Zeitdauer zugeführt werden, die ihrerseits den nächsten Signalparameter der Empfangssignale erfaßt und in einem Vergleicher mit vorgegebenen Grenzwerten vergleicht und ihrerseits nur diejenigen Empfangssignale, die innerhalb dieser vorgegebenen Grenzwerte liegen, der Auswerteinrichtung mit der nächst längeren Auswert-Zeitdauer zuführt, usw.

2. Funkerfassungsanlage nach Anspruch 1, dadurch gekennzeichnet, daß nur ein einziger den vorgegebenen Frequenzbereich zyklisch absuchender Suchempfänger vorgesehen ist, der mit mehreren Auswerteinrichtungen für unterschiedliche Signalparameter verbunden ist.

3. Funkerfassungsanlage nach Anspruch 1, dadurch gekennzeichnet, daß für jeden Auswertschritt jeweils so viele den vorgegebenen Frequenzbereich abdeckende Empfangseinrichtungen vorgesehen sind, wie im jeweils vorhergehenden Auswertschritt als relevant erkannte Frequenzen erwartet werden.
